Europäisches Patentamt

European Patent Office

Office européen des brevets

(19)

(11) **EP 1 219 011 B1**

(12) **EUROPÄISCHE PATENTSCHRIFT**

(45) Veröffentlichungstag und Bekanntmachung des Hinweises auf die Patenterteilung:
**07.05.2003  Patentblatt 2003/19**

(21) Anmeldenummer: **00963987.3**

(22) Anmeldetag: **14.09.2000**

(51) Int Cl.⁷: $H02P\ 6/08$, $H02P\ 6/06$

(86) Internationale Anmeldenummer:
**PCT/DE00/03194**

(87) Internationale Veröffentlichungsnummer:
**WO 01/020762 (22.03.2001 Gazette 2001/12)**

(54) **ELEKTRONISCH KOMMUTIERBARER MOTOR**

ELECTRONICALLY COMMUTATED MOTOR

MOTEUR A COMMUTATION ELECTRONIQUE

(84) Benannte Vertragsstaaten:
**DE ES FR GB IT**

(30) Priorität: **15.09.1999  DE 19944196**
            **09.09.2000  DE 10044742**

(43) Veröffentlichungstag der Anmeldung:
**03.07.2002  Patentblatt 2002/27**

(73) Patentinhaber: **ROBERT BOSCH GMBH**
**70442 Stuttgart (DE)**

(72) Erfinder:
- **SUTTER, Joerg**
  **76571 Gaggenau (DE)**
- **SCHWENK, Wolfgang**
  **Farmington Hills, MI 48331-3417 (US)**
- **BERLING, Claude**
  **F-67410 Drusenheim (FR)**

(56) Entgegenhaltungen:
**EP-A- 0 886 057       US-A- 5 092 140**
**US-A- 5 901 268**

**Beschreibung**

Stand der Technik

Die Erfindung betrifft einen elektronisch kommutierbaren Motor, dessen Erregerwicklungen über Halbleiter-Endstufen von einer elektronischen Steuereinheit mittels PWM-Steuersignalen ansteuerbar sind, wobei der Steuereinheit ein Sollwert vorgebbar ist und die Steuereinheit entsprechende PWM-Steuersignale an die Halbleiter-Endstufen abgibt, wobei in der Steuereinheit eine Motorkennlinie abgespeichert ist, aus der für den Sollwert eine zugeordnete Betriebsnenndrehzahl ableitbar ist, und wobei die abgeleitete Betriebsnenndrehzahl mit der Istdrehzahl des Motors vergleichbar ist und beim Überschreiten einer vorgebbaren oder vorgegebenen Drehzahldifferenz zwischen Betriebsnenndrehzahl und der Istdrehzahl die Steuereinheit und/oder die Halbleiter-Endstufen abschaltbar ist (sind).

Ein derartiger Motor ist aus der DE 198 04 874 A1 bekannt. Dabei werden die PWM-Steuersignale durch die Vorgabe des Sollwertes in ihrer Pulsweite festgelegt. Der Vergleich der Betriebsnenndrehzahl, die dem Sollwert zugeordnet ist, mit der Istdrehzahl dient während des Dauerlaufbetriebes der Erfassung von starken Erhöhungen des von außen einwirkenden Sollwertes, um die Pulsweite nur allmählich auf den neuen Wert einzustellen. Da die Motorkennlinie sich in Abhängigkeit der Motorlast und des Sollwertes ändert, erfordert dies einen erheblichen Speicheraufwand in der Steuereinheit, um die zugeordnete Betriebsnenndrehzahl für den Vergleich mit der Istdrehzahl, d.h. für die Überwachung des Motors zu ermitteln.

Die Kennliniendaten eines Motors in einem Speicher der Steuereinheit abzuspeichern und zur Ableitung eines Betriebswertes zu verwenden, ist auch aus der US-A 5,901,286 und der EP-A 0 886 057 bekannt. Dabei wird in der Regel ein Kennlinienfeld mit einer Vielzahl von Wertepaaren verwendet, aus denen durch Interpolation zu einer dritten Koordinate der gewünschte Betriebsnennwert abgeleitet werden kann. Dies erfordert jedoch einen erheblichen Speicheraufwand, insbesondere dann, wenn sich auch die Belastung des Motors ändert.

Es ist Aufgabe der Erfindung, einen Motor der eingangs erwähnten Art in der Steuereinheit mit einfachen Daten zu versehen, die mit minimalem Aufwand für eine vorgegebene Last die Ableitung der einem vorgegebenen Sollwert entsprechenden Betriebsnenndrehzahl wesentlich vereinfacht.

Diese Aufgabe wird nach der Erfindung dadurch gelöst, dass die Motorkennlinie als Kennlinienfeld mit vier dreidimensionalen Eckpunkten abgespeichert sind, wobei in der x-Achse die Grenzwerte der Versorgungsspannung und in der z-Achse die Grenzwerte der PWM-Steuersignale die Betriebsdrehzahlen der vier Eckpunkte des Kennlinienfeldes für eine vorgegebene, gleichbleibende Last festlegen und dass die Verbindungslinien zwischen den Eckpunkten des Kennlinienfeldes die Bildung eines Rasterfeldes zulassen, aus dem für eine vorliegende Versorgungsspannung und einem dem vorgegebenen Sollwert entsprechenden PWM-Steuersignal die zugeordnete Betriebsnenndrehzahl für den Vergleich mit der gemessenen Istdrehzahl ableitbar ist.

Dabei wird die Tatsache ausgenützt, dass in vielen Fällen der Motor stets mit demselben Verbraucher belastet ist, wie z.B. bei einem Lüfterantrieb. Die vier Koordinatenwerte des Kennlinienfeldes berücksichtigen nicht nur die den vorgebbaren Sollwerten entsprechenden Pulsweiten der PWM-Steuersignale, sondern auch die Schwankungen der Versorgungsspannung und definieren ein Kennlinienfeld, das für die jeweils vorliegende Versorgungsspannung und die Ansteuerbedingungen die eindeutige und einfache Ableitung, d.h. Berechnung der zugeordneten Betriebsnenndrehzahl zulässt, wobei die Verbindungslinien der Eckpunkte des Kennlinienfeldes die Vorgaben für ein Rasterfeld geben und so die Ableitung von Zwischenwerten in den Koordinaten-Richtungen für die Versorgungsspannung (z.B. x-Koordinate) und die Pulsweiten (z.B. z-Richtung) erleichtern und zu der gesuchten Betriebsnenndrehzahl (in y-Richtung) führen.

Je nach Einsatz des Motors kann nach einer weiteren Ausgestaltung vorgesehen sein, dass die vier Eckpunkte des Kennlinienfeldes bei vorgegebener Motorlast festgelegt sind. Der Motor kann dann auf einfache Weise für unterschiedliche Last, d.h. Verbraucher, ausgelegt werden.

Dabei kann nach einer Ausgestaltung vorgesehen sein, dass der Vergleich zwischen der Betriebsnenndrehzahl und der Istdrehzahl während des Motordauerlaufes kontinuierlich oder in zeitlichen Abständen wiederholt durchführbar ist.

Der Sollwert kann auf einfache Weise mittels Potentiometer manuell vorgebbar sein, wobei der Steuereinheit ein mehr oder weniger großes Einstellsignal zuführbar ist, das zur Abgabe zugeordneter PWM-Steuersignale für die Halbleiter-Endstufen verwendet wird. Außerdem kann mit diesem Einstellsignal über die gespeicherte Motorkennlinie die zugeordnete Betriebsnenndrehzahl abgeleitet und zum Vergleich mit der sich einstellenden Istdrehzahl des Motors herangezogen werden. Die Istdrehzahl des Motors kann auf unterschiedliche, auch bekannte Arten erfasst werden.

Dabei ist bevorzugt vorgesehen, dass der Steuereinheit für den Vergleich der Betriebsnenndrehzahl und der Istdrehzahl eine Vergleichseinrichtung zugeordnet ist, die vorzugsweise in die Steuereinheit integriert ist.

Damit der Überlastschutz nicht auf kurze Störimpulse der Istdrehzahlmessung reagiert, sieht eine Ausgestaltung vor, dass die Abschaltung der Steuereinheit und/oder der Halbleiter-Endstufen zeitlich verzögert erfolgt.

Geht dem Dauerlauf des Motors eine Hochlaufphase voraus, dann kann der Überlastschutz so ausgeführt sein, dass der Vergleich der Betriebsnenndrehzahl und der Istdrehzahl erst nach Ablauf einer Hochlaufphase mit vorgegebener Dauer einleitbar und durchführbar ist, damit es in dieser Betriebsphase zu keiner Fehlabschaltung kommt. Die Hochlaufphase kann durch die Steuereinheit vorgegeben werden, wobei als Parameter die Amplitude der Pulse und die Pulsweite der PWM-Steuersignale als auch deren Kommutierungsfrequenz und dgl. verwendet werden kann. Die Hochlaufphase des Motors ist dabei mit der Einschaltung der Steuereinheit und/oder der Halbleiter-Endstufen und/oder der Vorgabe eines Sollwertes für die Steuereinheit einleitbar.

Die Erfindung wird anhand eines als in der Zeichnung dargestellten Ausführungsbeispiels näher erläutert. Es zeigen:

Fig. 1    ein Blockschaltbild der Funktionseinheiten des Motors und

Fig. 2    ein in der Steuereinheit abgespeichertes Kennlinienfeld.

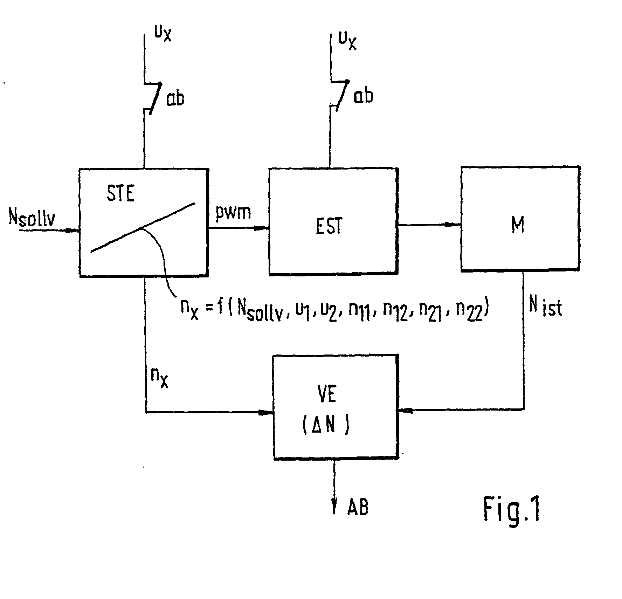

Wie das Blockschaltbild nach Fig. 1 zeigt, umfasst die Motoreinheit eine elektronische Steuereinheit STE, der eine Vergleichseinrichtung VE zugeordnet ist. Dieser Steuereinheit STE wird für einen gewünschten Dauerbetrieb ein entsprechend eingestellter Sollwert $N_{sollv}$ vorgegeben. Damit werden nach einer Hochlaufphase entsprechend bemessene PWM-Steuersignal pwm an die Halbleiter-Endstufen EST abgegeben, die entsprechend der Pulsweiten dieser PWM-Steuersignale pwm die Erregerwicklungen des Motors M bestromen. Darauf stellt sich ein Istdrehzahl $N_{ist}$ am Motor M ein, die auf bekannte Art erfasst und als Signal einer Vergleichseinrichtung VE zugeführt wird, die in der Steuereinheit STE integriert sein kann. In der Steuereinheit STE ist eine Motorkennlinie abgespeichert, die für jeden Sollwert $N_{sollv}$ die Ableitung einer Betriebsnenndrehzahl $n_x$ erlaubt. Diese Betriebsnenndrehzahl $n_x$ wird mehr oder weniger genau bei dem vorgegebenen Sollwert $N_{sollv}$ erhalten, wenn die Steuereinheit STE, die Halbleiter-Endstufen EST und der Motor M fehlerfrei arbeiten und keine Bedingungen vorliegen, die zu einem Abfall der Istdrehzahl $N_{ist}$ führen.

Die Betriebsnenndrehzahl $n_x$ wird wie die Istdrehzahl $N_{ist}$ der Vergleichseinrichtung VE zugeführt und es wird eine Drehzahlabweichung $\Delta N$ ermittelt. Liegt die Istdrehzahl $N_{ist}$ mehr als eine vorgegebene oder vorgebbare Drehzahlabweichung $\Delta N$ unter der erwarteten Betriebsnenndrehzahl $n_x$, dann liegt ein Fehler vor, der im Dauerbetrieb zu einer Überlastung führen kann. Daher wird durch die Vergleichseinrichtung VE ein Abschaltesignal AB erzeugt, mit dem die Steuereinheit STE und/oder die Halbleiter-Endstufen EST abgeschaltet werden können, wie die Kontakte ab im Stromkreis der Versorgungsspannung $U_{batt}$ andeuten.

Wird der Sollwert $N_{sollv}$ verändert, dann verändern sich auch die PWM-Steuersignale pwm und demzufolge die Istdrehzahl $N_{ist}$ des Motors M. Der Vergleichseinrichtung VE wird eine entsprechend neue Betriebsnenndrehzahl $n_x$ zugeführt und der Vergleich erfolgt in derselben Weise für den neuen Dauerlauf mit veränderter Drehzahl.

Die Abschaltung der Steuereinheit STE und/oder der Halbleiter-Endstufen EST kann auch verzögert eingeleitet werden, um Störspitzen in den abgeleiteten und erfassten Drehzahlwerten zu unterdrücken.

Die zulässige Drehzahlabweichung $\Delta N$ kann auch von der Größe des vorgegebenen Sollwertes $N_{sollv}$ und der vorliegenden Größe der Versorgungsspannung $u_x$ abhängig gemacht werden. Der Vergleich durch die Vergleichseinrichtung VE kann während des Dauerlaufes kontinuierlich oder in zeitlichen Abständen wiederholt durchgeführt werden. Außerdem kann der Überlastschutz durch den Vergleich und die Abschaltung erst nach Erreichen der durch den Sollwert vorgegebenen Betriebsnenndrehzahl, d.h. nach Ablauf einer vorgegebenen oder vorgebbaren Hochlaufzeit, wirksam geschaltet werden. Die Hochlaufzeit kann dabei mit der Einschaltung, d.h. dem Anlegen der Versorgungsspannung $u_x$ der Steuerschaltung STE und/oder der Halbleiter-Endstufen EST und/oder mit dem Anlegen eines vorgegebenen Sollwertes $N_{sollv}$ an die Steuereinheit STE gestartet werden.

Die von der Steuereinheit STE abgeleitete und errechnete Betriebsnenndrehzahl $n_x$ ist nicht nur abhängig von der vorliegenden Versorgungsspannung $u_x$ mit ihren Grenzwerten $u_1$ und $u_2$, sondern auch von den abgespeicherten Drehzahlen $n_{11}$, $n_{12}$, $n_{21}$, $n_{22}$ der Eckpunkte des Kennlinienfeldes KF, wie die Angabe $n_x = f(N_{sollv}, u_1, u_2, n_{11}, n_{12}, n_{21}, n_{22})$ in Fig. andeutet und wie später noch erläutert wird.

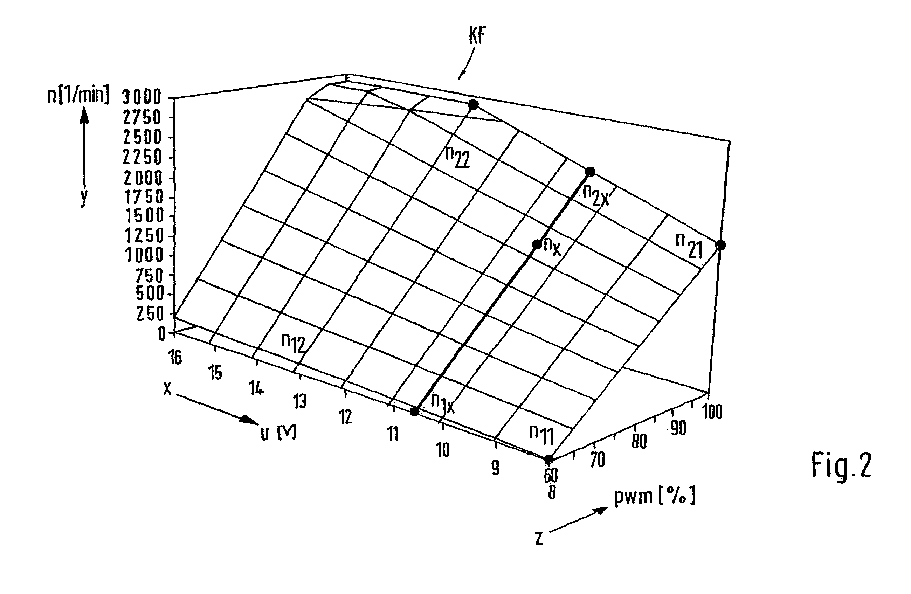

Wie das dreidimensionale Kennlinienfeld KF nach Fig. 2 zeigt, ist in x-Richtung der Spannungsbereiche von $U_{max}$ bis $U_{min}$ aufgetragen, während in z-Richtung die Pulsweite von $pwm_{min}$ bis $pwm_{max}$ reicht. Im Ausführungsbeispiel ist $U_{max}$ = 13V und $U_{min}$ = 8V gewählt und die Pulsweite hat einen Bereich von $pwm_{min}$ = 60 % bis $pwm_{max}$ = 100 %. Für die kleinste Versorgungsspannung ergeben sich bei $pwm_{min}$ = 60 % und $pwm_{max}$ = 100 % Betriebsnenndrehzahlen von $n_{11}$ = 50 min$^{-1}$ und $n_{21}$ = 1800 mm$^{-1}$, während für die größte Versorgungsspannung bei $pwm_{min}$ = 60 % und $pwm_{max}$ = 100 % Betriebsnenndrehzahlen $n_{12}$ = 150 min$^{-1}$ und $n_{22}$ = 2900 min$^{-1}$ ergeben. Diese Betriebsnenndrehzahlen $n_{11}$ bis $n_{22}$ definieren die vier Eckpunkte P1 bis P4 im dreidimensionalen Kennlinienfeld KF. Die Verbindungslinien zwischen den Eckpunkten $n_{11}$ und $n_{21}$ bzw. $n_{11}$ und $n_{12}$ bzw. $n_{21}$ und $n_{22}$ bzw. $n_{12}$ und $n_{22}$ lassen die Bildung eines Rasterfeldes zu, das für vorliegende Versorgungsspannungen $U_x$ und einem Sollwert entsprechender Pulsweite $pwm_x$ die Ableitung der zugeordneten Betriebsnenndrehzahlen $n_x$ auf der Geraden $n_{1x}$ - $n_{2x}$ zulässt. So kann bei einer Versorgungsspannung von $U_x$ = 10,5V und einer Pulsweite von ca. 87 % aus dem Kennlinienfeld KF eine Betriebsnenndrehzahl von ca.

1800 min.$^{-1}$ interpoliert werden.

Dieses Kennlinienfeld KF gilt für einen bestimmten Motor für eine vorgegebene, gleichbleibende Last. Für eine andere Last kann ein dafür gültiges Kennlinienfeld KF in der Steuereinheit STE abgespeichert werden.

Wie das dreidimensionale Kennlinienfeld KF nach Fig. 2 zeigt, ist in x-Richtung die Versorgungsspannung $u_x$ mit dem Spannungsbereich von der kleinsten Versorgungsspannung $u_1$ = 8V bis zur größten Versorgungsspannung $u_2$ = 13V aufgetragen. In z-Richtung ist die Pulsweite pwm der PWM-Steuersignale vorgegeben, die von der minimalen Pulsweite $pwm_1$ = 60 % bis zur maximalen Pulsweite $pwm_2$ = 100 % reichen kann. Bei vorgegebener Last des Motors werden vier Grenz-Betriebsfälle mit $u_1$ und $pwm_1$, $u_1$ und $pwm_2$, $u_2$ und $pwm_1$ sowie $u_2$ und $pwm_2$ ermittelt, die zu den Betriebsnenndrehzahlen $n_x$ = $n_1$, $n_{12}$, $n_{21}$ und $n_{22}$ führen und damit das Kennlinienfeld KF nach Fig. 2 definieren.

Wird der Motor M mit einer anderen Last belastet, dann ergibt sich ein ähnliches Kennlinienfeld KF mit neuen Betriebsnenndrehzahlen $n_{11}$, $n_{12}$, $n_{21}$ und $n_{22}$.

Für das in Fig. 2 dargestellte Kennlinienfeld KF eines Ausführungsbeispiels ergeben sich folgende Werte:

$$n_{11} = 50 \text{ min}^{-1} \text{ bei } u_1 = 8V \text{ und } pwm_1 = 60\,\%$$

$$n_{12} = 150 \text{ min}^{-1} \text{ bei } u_2 = 13V \text{ und } pwm_1 = 60\,\%$$

$$n_{21} = 1800 \text{ min}^{-1} \text{ bei } u_1 = 8V \text{ und } pwm_2 = 100\,\%$$

$$n_{22} = 2900 \text{ min}^{-1} \text{ bei } u_2 = 13V \text{ und } pwm_2 = 100\,\%.$$

Das Kennlinienfeld KF lässt sich als Rasterfeld darstellen, wobei die Verbindungslinien zwischen den Eckpunkten $n_{11}$ und $n_{12}$ bzw. $n_{21}$ und $n_{22}$ sowie $n_{11}$ und $n_{22}$ bzw. $n_{12}$ und $n_{22}$ die Rasterung vorgeben und wie gezeigt ist, für eine vorliegende Versorgungsspannung $u_x$ die Ableitung der zugeordneten Betriebsnenndrehzahl $n_x$ bei vorliegendem PWM-Steuersignal $p_x$ ermöglicht. Das PWM-Steuersignal $pwm_x$ ist dem vorgegebenen Sollwert $N_{sollv}$ zugeordnet.

Wie die Rasterlinie $n_{x1}$ - $n_{x2}$ zeigt, führt bei $u_x$ = 10,5V und einer Pulsweite von $pwm_x \approx 87,5\,\%$ die Ableitung der Betriebsnenndrehzahl $n_x$ zu einem Wert von etwa 1800 min.$^{-1}$.

Für die Berechnung der einem Sollwert $N_{sollv}$ zugeordneten Betriebsnenndrehzahl $n_x$ wird wie folgt verfahren:

$$stg1 = \frac{n_{12} - n_{11}}{u_2 - u_1} \qquad stg2 = \frac{n_{22} - n_{21}}{u_2 - u_1}$$

$$n_{1x} = n_{11} + stg_1 \cdot (u_x - u_1)$$

$$n_{2x} = n_{21} + stg_2 \cdot (u_x - u_1)$$

$$stg_3 = \frac{n_{2x} - n_{1x}}{pwm_2 - pwm_1} = \frac{n_{21} - n_{11} + (stg_2 - stg_1) \cdot (u_x - u_1)}{pwm_2 - pwm_1}$$

Darin bedeuten:

$stg_1$ -
$stg_2$ -
$stgs_3$ -

$$n_x = n_{1x} + stg_3 \cdot (pwm_x - pwm_1)$$

Da rechnerintern nicht mit der Drehzahl, sondern mit ihrem Kehrwert gearbeitet wird; muss obige Gleichung zur Berechnung des Flächenpunktes $n_x$ entsprechend umgestellt werden. Mit $T_x = a/n_x$ folgt:

$$\frac{a}{T_x} = n_{1x} + stg_3 \cdot (pwn_x - pwm_1)$$

$$T_x = \frac{a \cdot (pwm_1 - pwm_2)}{\left(\left(\left(stg_1 - stg_2\right) \cdot u_x - n_{21} + n_{11} + \left(stg_2 - stg_1\right) \cdot u_1\right) \cdot pwm_x + \left(pwm_1 \cdot stg_2 - pwm_2 \cdot stg_1\right) \cdot u_x + pwm_1 \cdot \left(n_{21} - u_1 \cdot stg_2\right) + pwm_2 \cdot \left(stg_1 \cdot u_1 - \right.\right.}$$

In voranstehender Formel sind lediglich die Versorgungsspannung $u_x$ und die Pulsweite der Endstufenansteuerung $pwm_x$ variabel. Die restlichen Faktoren können als feste Parameter im ROM oder EEPROM abgelegt werden. Nachfolgend nochmals die gleiche Formel mit den im Programmcode verwendeten Variablennamen.

$$v\_tx = \frac{K\_ZAEHL_1}{\left(\left(K\_NENN_1 \cdot v\_ubat + K\_NENN_2\right) \cdot v\_pwm\_endst + K\_NENN_3 \cdot v\_ubat + K\_NENN_4\right)}$$

Bei der Bandendeprogrammierung sind nun die entsprechenden Parameter vom Prüfstand in das EEPROM der Motorsteuerung zu übertragen.

$$K\_NENN_1 = (stg_1 - stg_2)$$

$$K\_NENN_2 = -n_{21} + n_{11} + (stg_2 - stg_1) \cdot u_1$$

$$K\_NENN_3 = (pwm_1 \cdot stg_2 - pwm_2 \cdot stg_1)$$

$$K\_NENN_4 = pwm_1 \cdot (n_{21} - u_1 \cdot stg_2) + pwm_2 \cdot (stg_1 \cdot u_1 - n_{11})$$

**Patentansprüche**

**1.** Elektronisch kommutierbarer Motor, dessen Erregerwicklungen über Halbleiter-Endstufen (EST) von einer elektronischen Steuereinheit (STE) mittels PWM-Steuersignalen (PWM$_{end}$) ansteuerbar sind, wobei der Steuereinheit (STE) ein Sollwert (N$_{sollv}$) vorgebbar ist und die Steuereinheit (STE) entsprechende PWM-Steuersignale (PWM) an die Halbleiter-Endstufen (EST) abgibt, wobei in der Steuereinheit (STE) eine Motorkennlinie abgespeichert ist, aus der für den Sollwert (N$_{sollv}$) eine zugeordnete Betriebsnenndrehzahl ($n_x$) ableitbar ist, und wobei die abgeleitete Betriebsnenndrehzaht ($n_x$) mit der Istdrehzahl (N$_{ist}$) des Motors (M) vergleichbar ist und beim Überschreiten einer vorgebbaren oder vorgegebenen Drehzahldifferenz ($\Delta$N) zwischen Betriebsnenndrehzahl ($n_x$) und der Istdrehzahl (N$_{ist}$) die Steuereinheit (STE) und/oder die Halbleiter-Endstufen (EST) abschaltbar ist (sind),
**dadurch gekennzeichnet,**
**dass** die Motorkennlinie als Kennlinienfeld (KF) mit vier dreidimensionalen Eckpunkten (x, y, z) abgespeichert sind, wobei in der x-Achse die Grenzwerte ($u_1$ und $u_2$) der Versorgungsspannung und in der z-Achse die Grenzwerte (pwm$_{min}$ und pwm$_{max}$) der PWM-Steuersignale die Betriebsdrehzahlen ($n_{11}$, $n_{12}$, $n_{21}$ und $n_{22}$) der vier Eckpunkte des Kennlinienfeldes (KF) für eine vorgegebene, gleichbleibende Last festlegen und
**dass** die Verbindungslinien ($n_{11}$-$n_{12}$; $n_{12}$-$n_{21}$; $n_{21}$-$n_{22}$; $n_{22}$-$n_{11}$) zwischen den Eckpunkten des Kennlinienfeldes (KF) die Bildung eines Rasterfeldes zulassen, aus dem für eine vorliegende Versorgungsspannung ($u_x$) und einem dem vorgegebenen Sollwert (N$_{sollv}$) entsprechenden PWM-Steuersignal (pwm$_x$) die zugeordnete Betriebsnenn-

drehzahl ($n_x$) für den Vergleich mit der gemessenen Istdrehzahl ($N_{ist}$) ableitbar ist.

**2.** Elektronisch kommutierbarer Motor nach Anspruch 1,
**dadurch gekennzeichnet,**
**dass** die vier Eckpunkte des Kennlinienfeldes (KF) bei vorgegebener Motorlast festgelegt sind.

**3.** Elektronisch kommutierbarer Motor nach Anspruch 1 oder 2,
**dadurch gekennzeichnet,**
**dass** der Vergleich zwischen der Betriebsnenndrehzahl ($n_x$) und der Istdrehzahl ($N_{ist}$) während des Motordauerlaufes kontinuierlich oder in zeitlichen Abständen wiederholt durchführbar ist.

**4.** Elektronisch kommutierbarer Motor nach einem der Ansprüche 1 bis 3,
**dadurch gekennzeichnet,**
**dass** der Sollwert ($N_{sollv}$) mittels Potentiometer manuell vorgebbar ist.

**5.** Elektronisch kommutierbarer Motor nach einem der Ansprüche 1 bis 4,
**dadurch gekennzeichnet,**
**dass** der Steuereinheit (STE) für den Vergleich der Betriebsnenndrehzahl ($n_x$) und der Istdrehzahl ($N_{ist}$) eine Vergleichseinrichtung (VE) zugeordnet ist, die vorzugsweise in die Steuereinheit (STE) integriert ist.

**6.** Elektronisch kommutierbarer Motor nach einem der Ansprüche 1 bis 5,
**dadurch gekennzeichnet,**
**dass** die Abschaltung (AB) der Steuereinheit (STE) und/oder der Halbleiter-Endstufen (EST) zeitlich verzögert erfolgt.

**7.** Elektronisch kommutierbarer Motor nach einem der Ansprüche 1 bis 6,
**dadurch gekennzeichnet,**
**dass** der Vergleich der Betriebsnenndrehzahl ($n_x$) und der Istdrehzahl ($N_{ist}$) erst nach Ablauf einer Hochlaufphase mit vorgegebener Dauer einleitbar und durchführbar ist.

**8.** Elektronisch kommutierbarer Motor nach Anspruch 7,
**dadurch gekennzeichnet,**
**dass** die Hochlaufphase mit der Einschaltung der Steuereinheit (STE) und/oder der Halbleiter-Endstufen (EST) und/oder der Vorgabe eines Sollwertes ($N_{sollv}$) einleitbar ist.

**Claims**

**1.** Electronically commutated motor whose field windings can be driven via semiconductor output stages (EST) by an electronic control unit (STE) by means of PWM control signals ($PWM_{end}$), it being possible to prescribe a desired value ($N_{soll}$) for the control unit (STE) and the control unit (STE) outputting corresponding PWM control signals (PWM) to the semiconductor output stages (EST), there being stored in the control unit (STE) a motor characteristic from which it is possible to derive an assigned rated operative speed ($n_x$) for the desired value ($N_{soll}$), and the derived rated operative speed ($N_x$) being comparable with the actual speed ($N_{ist}$) of the motor (M), and it being possible for the control unit (STE) and/or the semiconductor output stages (EST) to be switched off upon overshooting of a prescribable or prescribed speed difference ($\Delta N$) between the rated operative speed ($n_x$) and the actual speed ($N_{ist}$), **characterized in that** the motor characteristic is stored as a family of characteristics (KF) with four three-dimensional corners (x, y, z), the operative speeds ($n_{11}$, $n_{12}$, $n_{21}$ and $n_{22}$) of the four corners of the family of characteristics (KF) being stipulated for a prescribed, constant load by the limiting values ($u_1$ and $u_2$) of the supply voltage on the x-axis and by the limiting values ($pwm_{min}$ and $pwm_{max}$) of the PWM control signals on the z-axis, and **in that** the connecting lines ($n_{11}$-$n_{12}$; $n_{12}$-$n_{21}$; $n_{21}$-$n_{22}$; $n_{22}$-$n_{11}$) between the corners of the family of characteristics (KF) permit the formation of a grid coordinate system from which the assigned rated operative speed ($n_x$) can be derived for comparison with the measured actual speed ($N_{ist}$) for a present supply voltage ($u_x$) and a PWM control signal ($pwm_x$) corresponding to the prescribed desired value ($N_{soll}$).

**2.** Electronically commutated motor according to Claim 1, **characterized in that** the four corners of the family of characteristics (KF) are stipulated for a given motor load.

3. Electronically commutated motor according to Claim 1 or 2, **characterized in that** the comparison between the rated operative speed ($n_x$) and the actual speed ($N_{ist}$) can be carried out repeatedly continuously or at time intervals during continuous running of the motor.

4. Electronically commutated motor according to one of Claims 1 to 3, **characterized in that** the desired value ($N_{soll}$) can be prescribed manually by means of potentiometers.

5. Electronically commutated motor according to one of Claims 1 to 4, **characterized in that**, for the comparison of the rated operative speed ($n_x$) and the actual speed ($N_{ist}$), the control unit (STE) is assigned a comparing device (VE) which is preferably integrated in the control unit (STE).

6. Electronically commutated motor according to one of Claims 1 to 5, **characterized in that** the control unit (STE) and/or the semiconductor output stages (EST) are switched off (AB) with a time delay.

7. Electronically commutated motor according to one of Claims 1 to 6, **characterized in that** the comparison of the rated operative speed ($n_x$) and the actual speed ($N_{ist}$) can be initiated and carried out only after expiry of a startup phase of prescribed duration.

8. Electronically commutated motor according to Claim 7, **characterized in that** the acceleration phase can be initiated with the switching-on of the control unit (STE) and/or of the semiconductor output stages (EST), and/or with the prescription of a desired value ($N_{soll}$).

**Revendications**

1. Moteur à commutation électronique dont les enroulements d'excitation sont commandés par des étages de puissance à semi conducteur (EST) à partir d'une unité de commande électronique (ST) par des signaux de commande à modulation de largeur d'impulsion ($PWM_{fin}$),
l'unité de commande (STE) recevant une valeur de consigne prédéterminée ($N_{cons}$) et fournissent des signaux de commande (pwm), à modulations de largeur d'impulsion vers les étages de puissance à semi-conducteur (EST), une caractéristique de moteur étant enregistrée dans l'unité de commande (STE) à partir de laquelle, pour la valeur de consigne ($N_{cons}$), on déduit une vitesse de rotation nominale de fonctionnement ($n_x$), associée, et
la vitesse de rotation nominale de fonctionnement ($n_x$) ainsi déduite étant comparée à la vitesse de rotation réelle ($N_{reel}$) du moteur (M) et en cas de dépassement d'une différence de vitesse de rotation prédéterminée ou prédéterminable ($\Delta N$) entre la vitesse de rotation nominale de fonctionnement ($n_x$) et la vitesse de rotation réelle ($N_{reel}$), on coupe l'unité de commande (STE) et/ou les étages de puissance à semi-conducteur (EST),
**caractérisé en ce que**
la caractéristique de moteur est enregistrée comme champ de caractéristiques (KF) à quatre sommets à trois dimensions (x, y, z), suivant l'axe x les valeurs limites ($u_1$, $u_2$) de la tension d'alimentation et sur l'axe z, les valeurs limites ($pwm_{min}$ et $pwm_{max}$) des signaux de commande à modulation de largeur d'impulsion, fixent les vitesses de rotation de fonctionnement ($n_{11}$, $n_{12}$, $n_{21}$, $n_{22}$) aux quatre sommets du champ de caractéristiques (KF) pour une charge constante prédéterminée, et
les lignes de jonction ($n_{11}$ - $n_{12}$ ; $n_{12}$ - $n_{21}$ ; $n_{21}$ - $n_{22}$ ; $n_{22}$, $n_{11}$) entre les sommets du champ de caractéristiques (KF) permettent la formation d'un champ tramé.

2. Moteur à commutation électronique selon la revendication 1,
**caractérisé en ce que**
les quatre sommets du champ de caractéristiques (KF) sont fixés pour une charge de moteur prédéterminée.

3. Moteur à commutation électronique selon la revendication 1 ou 2,
**caractérisé en ce que**
la comparaison entre la vitesse de rotation nominale de fonctionnement ($n_x$) et la vitesse de rotation réelle ($N_{reel}$) est effectuée en continu pendant la durée de fonctionnement du moteur ou de façon répétée à des intervalles.

4. Moteur à commutation électronique selon l'une des revendications 1 à 3,
**caractérisé en ce que**
la valeur de consigne ($N_{cons}$) est prédéterminée manuellement à l'aide d'un potentiomètre.

**5.** Moteur à commutation électronique selon l'une des revendications 1 à 4,
**caractérisé en ce qu'**
une installation de comparaison (VE) est associée à l'unité de commande (STE) pour comparer la vitesse de rotation nominale de fonctionnement ($n_x$) et la vitesse de rotation réelle ($N_{reel}$), cette installation de comparaison étant de préférence intégrée dans l'unité de commande (STE).

**6.** Moteur à commutation électronique selon l'une des revendications 1 à 5,
**caractérisé en ce que**
la coupure (AB) de l'unité de commande (STE) et/ou des étages de puissance à semi-conducteur (EST) se fait de manière temporisée.

**7.** Moteur à commutation électronique selon l'une des revendications 1 à 6,
**caractérisé en ce que**
la comparaison de la vitesse de rotation nominale de fonctionnement ($n_x$) et de la vitesse de rotation réelle ($N_{reel}$) se fait seulement à la fin de la phase de montée en vitesse après une durée prédéterminée.

**8.** Moteur à commutation électronique selon la revendication 7,
**caractérisé en ce que**
la phase de montée en vitesse est lancée par la mise en marche de l'unité de commande (STE) et/ou des étages de puissance à semi-conducteur (EST) et/ou de la prédéfinition d'une valeur de consigne ($N_{cons}$).

$$n_X = f(N_{sollv}, v_1, v_2, n_{11}, n_{12}, n_{21}, n_{22})$$

Fig.1

Fig.2

EP 1 219 011 B1